# EUROPEAN PATENT APPLICATION

(11) **EP 3 441 857 A1**
(43) Date of publication of application: **13.02.2019**
(21) Application number: 18177038.9
(22) Date of filing: 11.06.2018
(51) Int. Cl.: G06F 3/041, G06K 9/00

(54) **DISPLAY APPARATUS FOR REDUCING MOIRE AND METHOD OF DRIVING THE SAME**

(30) Priority: 07.08.2017 KR 20170099608
(71) Applicant: Samsung Electronics Co., Ltd., Gyeonggi-do 16677 (KR)
(72) Inventor: KIM, Hyunjoon, 16678 Gyeonggi-do (KR)
(74) Representative: Elkington & Fife LLP

(57) **Abstract**

A display apparatus for reducing moire and a method of driving the same are provided. The display apparatus includes a pixel pattern in which pixels are periodically arranged, and a first sensor disposed on the display panel and including an electrode pattern in which a plurality of electrodes are periodically arranged. An electrode pitch of the electrode pattern is smaller than a pixel pitch of the pixel pattern, an electrode arrangement direction of the electrode pattern forms an angle with respect to a pixel arrangement direction of the pixel pattern, and at least two adjacent electrodes among the plurality of electrodes are connected to each other and configured to send and receive signals through one line.

## Description

### FIELD OF THE INVENTION

Apparatuses and methods consistent with example embodiments relate to a display apparatus for reducing moire and a method of driving the same.

### BACKGROUND OF THE INVENTION

The necessity for personal authentication using intrinsic features of individuals, such as fingerprints, voices, faces, hands, and irises, is gradually increasing, and such personal authentication is used in banking devices, entrance controllers, mobile devices, and laptop computers. In accordance with the recent widespread availability of mobile devices, such as smart phones, tablet personal computers (PCs), and smart watches, fingerprint recognition apparatuses for personal authentication are being employed to protect a large amount of security information stored in such mobile devices.

A display apparatus including a fingerprint recognition apparatus capable of directly recognizing a fingerprint on a display panel is being developed for purposes of design or user convenience. Such a display apparatus has a structure in which a display panel and a fingerprint sensor are stacked vertically. The display panel includes a pixel pattern in which pixels are periodically arranged, and the fingerprint sensor includes a sensor pattern in which electrodes are periodically arranged. Here, a moire pattern may be generated due to interference as the pixel pattern and the sensor pattern overlap each other, and such a moire pattern distorts an image to deteriorate the quality of the display apparatus.

### SUMMARY OF THE INVENTION

A display apparatus for reducing moire and a method of driving the same are provided.

According to an aspect of an example embodiment, there is provided a display apparatus including a display panel including a pixel pattern in which pixels are periodically arranged, and a first sensor disposed on the display panel and including an electrode pattern in which a plurality of electrodes are periodically arranged. An electrode pitch of the electrode pattern is smaller than a pixel pitch of the pixel pattern, an electrode arrangement direction of the electrode pattern forms an angle with respect to a pixel arrangement direction of the pixel pattern, and at least two adjacent electrodes among the plurality of electrodes are connected to each other and configured to send and receive signals through one line.

Embodiments may therefore be employed when a transparent sensor or an electrode structure is present on a display of a cellular phone/a smartwatch/a tablet personal computer (PC)/a TV/a monitor.

Improved image quality when on-screen fingerprint sensor technology is applied to a cellular phone or a smart watch may be provided by proposed embodiments.

Embodiments may be based on a structure of an electrode for maintaining performance of the fingerprint sensor and having a moire pattern that is not recognisable by using an electrode structure having a small pitch (< 30 *µ*m or < a display pixel pitch/2) and an appropriate rotation angle and by employing a driving method performed by grouping the electrodes (e.g., 3 to 4 electrodes) and reading a signal from the grouped electrodes.

Proposed embodiments may, for example, provide a fingerprint sensor configured to avoid moire by having a pitch less than a half of (amounting to 1/5 to 2/5 of) a pitch of an electrode of a general fingerprint sensor ((50 to 100 *µ*m) and forming a certain angle with a display. A method of grouping several (about 3 to 4) electrodes, and sending or reading a signal may be used to address an issue that sensing ability typically worsens when a size of the electrodes is small.

A pitch and a rotation angle with respect to the electrodes may vary according to a pixel period of the display and a shape of the electrodes.

If the several electrodes are grouped (through parallel connection for example), since resistance may decrease, sensing performance may be optimized by increasing a sensing strength or maintaining a low resistance by adjusting a width of the electrodes.

A diffuser film or the like may be used as an intermediate layer to increase an effect of reducing moire.

The display panel may include an organic light-emitting display panel or a liquid crystal display panel.

The electrode pitch of the electrode pattern may be half or less of the pixel pitch of the pixel pattern.

The angle of the electrode arrangement direction of the electrode pattern with respect to the pixel arrangement direction of the pixel pattern may be about 0° to 45°.

A number of the at least two adjacent electrodes electrically connected to each other may be 2 to 10.

The first sensor may include a fingerprint sensor or a touch sensor.

The plurality of electrodes may include a plurality of first electrodes and a plurality of second electrodes crossing the plurality of first electrodes.

Adjacent first electrodes among the plurality of first electrodes may be connected to a first signal line, and adjacent second electrodes among the plurality of second electrodes may be connected to a second signal line.

The display apparatus may further include a second sensor interposed between the display panel and the first sensor.

The first sensor may include a fingerprint sensor, and the second sensor may include a touch sensor.

The first sensor may include a fingerprint-touch complex sensor.

The plurality of electrodes may include a plurality of first fingerprint electrodes, a plurality of second fingerprint electrodes crossing the plurality of first fingerprint electrodes, a plurality of first touch electrodes arranged periodically between the plurality of first fingerprint electrodes on a same first plane as the plurality of first fingerprint electrodes, and a plurality of second touch electrodes arranged periodically between the plurality of second fingerprint electrodes on a same second plane as the plurality of second fingerprint electrodes.

Adjacent first fingerprint electrodes among the plurality of first fingerprint electrodes may be connected to a first fingerprint signal line, and adjacent second fingerprint electrodes among the plurality of second fingerprint electrodes may be connected to a second fingerprint signal line.

Adjacent first touch electrodes among the plurality of first touch electrodes may be connected to a first touch signal line, and adjacent second touch electrodes among the plurality of second touch electrodes may be connected to a second touch signal line.

Among the plurality of first touch electrodes and the plurality of first fingerprint electrodes, a first number of the adjacent first touch electrodes that are electrically connected to each other may be greater than or equal to a second number of the adjacent first fingerprint electrodes that are electrically connected to each other, and among the plurality of second touch electrodes and the plurality of second fingerprint electrodes, a third number of the adjacent second touch electrodes that are electrically connected to each other may be greater than or equal to a fourth number of the adjacent second fingerprint electrodes that are electrically connected to each other.

The first sensor may be disposed on one portion of the display panel.

The display apparatus may further include a dummy pattern disposed on the display panel and configured to prevent visibility of the first sensor.

The electrode arrangement direction may be parallel or perpendicular to one of the plurality of electrodes.

According to an aspect of another example embodiment, there is provided a method of driving a display apparatus, the display apparatus including a display panel including a pixel pattern in which pixels are periodically arranged; and a first sensor disposed on the display panel and including an electrode pattern in which a plurality of electrodes are periodically arranged. The method includes making an electrode pitch of the electrode pattern smaller than a pixel pitch of the pixel pattern, setting an electrode arrangement direction of the electrode pattern to form an angle with respect to a pixel arrangement direction of the pixel pattern, and connecting at least two adjacent electrodes among the plurality of electrodes to each other such that the at least two adjacent electrodes send and receive signals through one line.

According to an aspect of another example embodiment, there is provided a display apparatus including a display panel including a pixel pattern in which pixels are periodically arranged on a first x-y plane, and a first sensor disposed on the display panel and including an electrode pattern in which a plurality of electrodes are periodically arranged on a second x-y plane. A first x-axis of the first x-y plane forms an angle with respect to a second x-axis of the second x-y plane, the angle being over 0°, and a first y-axis of the first x-y plane forms the angle with respect to a second y-axis of the second x-y plane.

An electrode pitch of the electrode pattern may be smaller than a pixel pitch of the pixel pattern.

Each adjacent pair or group of the plurality of electrodes may be connected to each other.

### BRIEF DESCRIPTION OF THE DRAWINGS

The above and/or other aspects will become apparent and more readily appreciated from the following description of example embodiments, taken in conjunction with the accompanying drawings in which:
FIG. 1 is an exploded perspective view of a display apparatus according to an example embodiment;
FIG. 2 is a cross-sectional view of the display apparatus of FIG. 1;
FIG. 3 is a cross-sectional view of an organic light-emitting display panel according to an example embodiment;
FIG. 4 is a cross-sectional view of a liquid crystal display panel according to an example embodiment;
FIG. 5 is a plan view of a pixel pattern applicable to a display panel of FIG. 2;
FIG. 6 is a partially enlarged view of the pixel pattern of FIG. 5;
FIG. 7 is a partially enlarged view of another pixel pattern applicable to the display panel of FIG. 2;
FIG. 8 is a cross-sectional view of a sensor of FIG. 2;
FIG. 9 is a diagram for describing principles of fingerprint recognition in the sensor of FIG. 8;
FIG. 10 is a plan view of an electrode pattern applicable to the sensor of FIG. 2;
FIGS. 11A and 11B illustrate other electrode patterns applicable to the sensor of FIG. 2;
FIG. 12 is a plan view of the display apparatus of FIG. 2, in which the pixel pattern of the display panel and the electrode pattern of the sensor overlap, according to an example embodiment;
FIGS. 13A, 13B and 13C illustrate first through third real-space patterns for describing a case in which a moire pattern is generated;
FIGS. 14A, 14B and 14C illustrate first through third spatial frequency vector distributions in which the first through third real-space patterns of FIGS. 13A through 13C are expressed via Fourier transform;
FIGS. 15A, 15B and 15C illustrate first through third real-space patterns for describing a case in which a moire pattern is not generated, according to example embodiments;
FIGS. 16A, 16B and 16C illustrate first through spatial frequency vector distributions in which the first through third real-space patterns of FIGS. 15A through 15C are expressed via Fourier transform;
FIGS. 17A, 17B and 17C illustrate example arrangements of the display panel and the sensor in the display apparatus of FIG. 1;
FIG. 18 is a cross-sectional view of a display apparatus according to another example embodiment;
FIG. 19 is a cross-sectional view of a display apparatus according to another example embodiment; and
FIG. 20 is a plan view of the display apparatus of FIG. 19, in which a pixel pattern of a display panel and an electrode pattern of a sensor overlap, according to another example embodiment.

### DETAILED DESCRIPTION

Reference will now be made in detail to example embodiments, examples of which are illustrated in the accompanying drawings, like reference numerals refer to like elements throughout, and sizes of elements may be exaggerated for clarity. In this regard, the present example embodiments may have different forms and may not be construed as being limited to the descriptions set forth herein. Accordingly, the example embodiments are described below, by referring to the figures, to explain aspects.

It will be understood that when a component or layer is referred to as being "on" or "above" another component or layer, the component or layer can be directly or indirectly on another component or layer. As used herein, the singular forms "a," "an" and "the" are intended to include the plural forms as well, unless the context clearly indicates otherwise. It will be further understood that the terms "include" and/or "comprise" used herein specify the presence of stated features or components, but do not preclude the presence or addition of one or more other features or components.

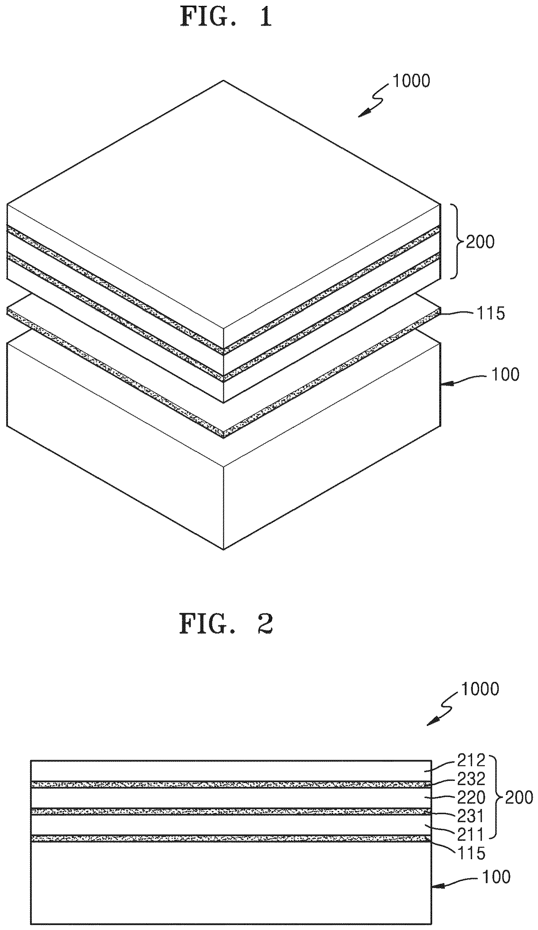

FIG. 1 is an exploded perspective view of a display apparatus 1000 according to an example embodiment, and FIG. 2 is a cross-sectional view of the display apparatus 1000 of FIG. 1. The display apparatus of FIG. 1 may be used in an electronic device, such as a smart phone, a smart watch, a tablet personal computer (PC), or a laptop computer, but is not limited thereto.

Referring to FIGS. 1 and 2, the display apparatus 1000 may include a display panel 100 on which an image is displayed, and a sensor 200 provided on the display panel 100. Here, the display panel 100 includes a pixel pattern in which pixels are periodically arranged, and the sensor 200 includes an electrode pattern in which electrodes are periodically arranged. A transparent adhesive layer 115 may be provided between the display panel 100 and the sensor 200. An optically clear adhesive (OCA) or an optically clear resin (OCR) may be used as the adhesive layer 115, but an example of the adhesive layer 115 is not limited thereto. The display panel 100 may include, for example, an organic light-emitting display panel or a liquid crystal display panel.

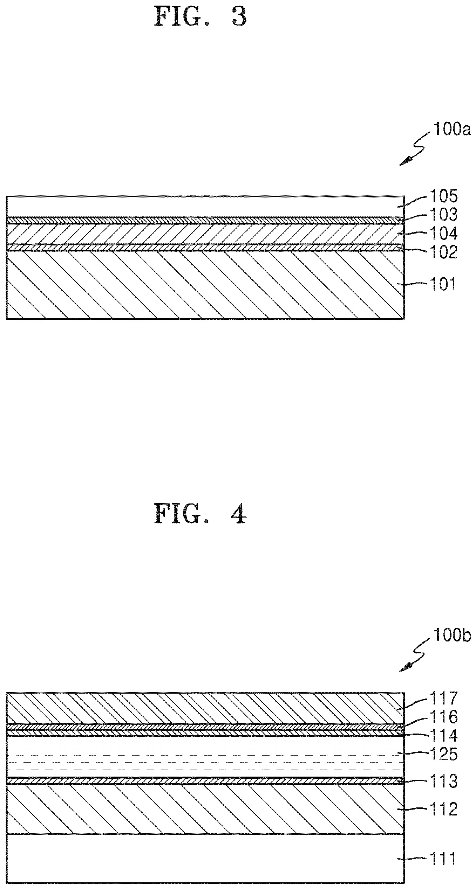

FIG. 3 is a cross-sectional view of an organic light-emitting display panel 100a according to an example embodiment. Referring to FIG. 3, the organic light-emitting display panel 100a may have a structure in which a first electrode 102, an organic emission layer 104, and a second electrode 103 are sequentially stacked on a substrate 101. Also, a protection layer 105 may be further provided above the second electrode 103. The organic light-emitting display panel 100a is well known to one of ordinary skill in the art, and thus details thereof are not provided here.

FIG. 4 is a cross-sectional view of a liquid crystal display panel 100b according to an example embodiment. Referring to FIG. 4, the liquid crystal display panel 100b may include a backlight 111, first and second electrodes 113 and 114, a liquid crystal layer 125 provided between the first and second electrodes 113 and 114, and a color filter layer 116 provided on the second electrode 114. Here, first and second substrates 112 and 117 may be further provided respectively on the first and second electrodes 113 and 114. The liquid crystal display panel 100b is well known to one of ordinary skill in the art, and thus details thereof are not provided here.

Referring again to FIG. 1, the display panel 100 includes the organic light-emitting display panel 100a or the liquid crystal display panel 100b, but alternatively, another display panel may be applied to the display panel 100.

The display panel 100 may include the pixel pattern in which the plurality of pixels are periodically arranged.

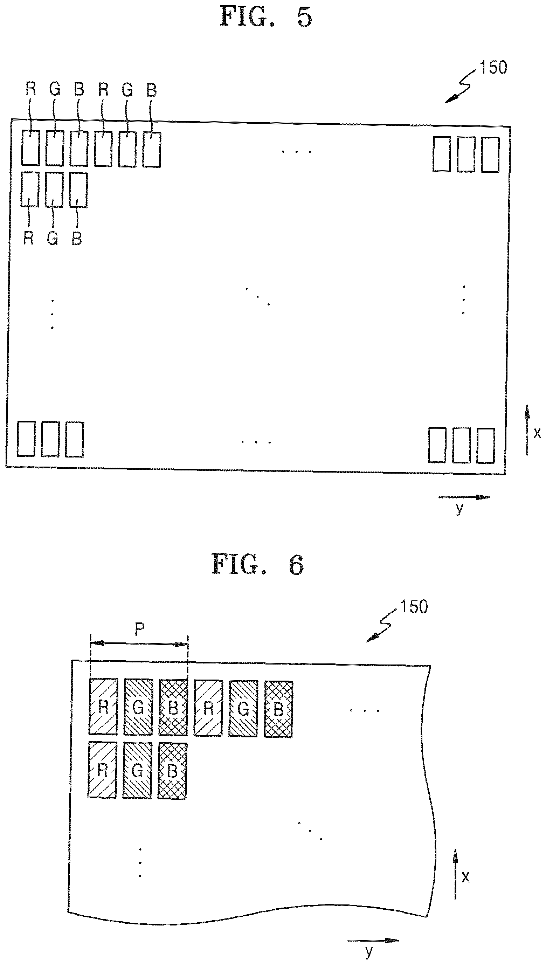

FIG. 5 is a plan view of a pixel pattern 150 applicable to the display panel 100 of FIG. 2, and FIG. 6 is a partially enlarged view of the pixel pattern 150 of FIG. 5.

Referring to FIGS. 5 and 6, the pixel pattern 150 may have a structure in which a plurality of pixels are periodically arranged. Each of the pixels may include sub-pixels of colors arranged in a form, i.e., may include red, green, and blue pixels R, G, and B. Here, the red, green, and blue pixels R, G, and B may be sequentially arranged in one direction. The pixels each including the red, green, and blue pixels R, G, and G may be repeatedly arranged with a pixel pitch P. The pixels of the pixel pattern 150 may be arranged along an x-direction and a y-direction perpendicular to the x-direction.

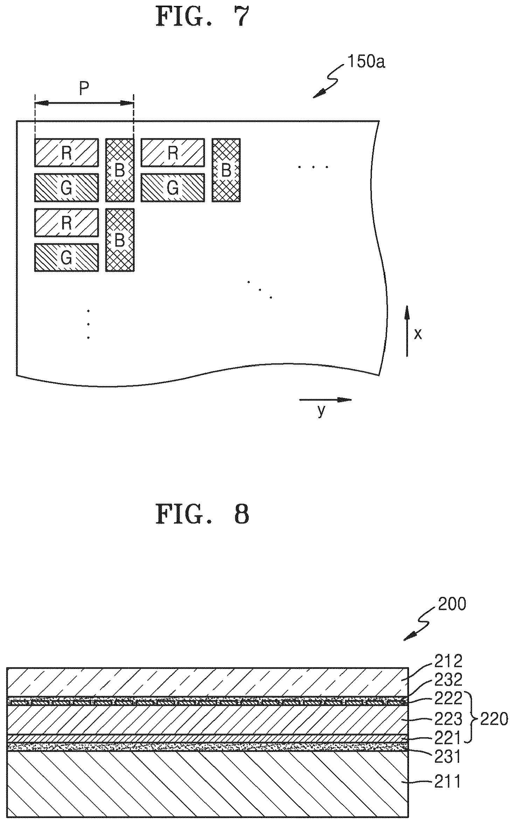

FIG. 7 is a partially enlarged view of another pixel pattern 150a applicable to the display panel 100 of FIG. 2. Referring to FIG. 7, the pixel pattern 150a may have a structure in which a plurality of pixels are periodically arranged. Each of the pixels may include sub-pixels of colors arranged in a form, i.e., may include a red pixel R, a green pixel G, and a blue pixel B. Here, the green pixel G may be disposed below the red pixel R, and the blue pixel B may be disposed at one side of the red and green pixels R and G. Sizes and shapes of the red, green, and blue pixels R, G, and B may vary according to each color, to optimize image quality and luminance of the display panel 100. The pixels each including the red, green, and blue pixels R, G, and B may be repeatedly arranged with a pixel pitch P. The pixels of the pixel pattern 150a may be arranged along the x-direction and the y-direction perpendicular to the x-direction.

The arrangements of the red, green, and blue pixels R, G, and B of FIGS. 5 through 7 are only examples, and may vary. Also, hereinabove, the pixel includes the sub-pixels of colors, i.e., the red, green, and blue pixels R, G and B, but the pixel may include sub-pixels of other colors, for example, a white pixel, a cyan pixel, a magenta pixel, and a yellow pixel.

FIG. 8 is a cross-sectional view of the sensor 200 of FIG. 2.

The sensor 200 of FIG. 8 may be a fingerprint sensor. For example, the sensor 200 may be an electrostatic fingerprint sensor. A fingerprint sensor may be an optical fingerprint sensor that recognizes a fingerprint by detecting a 2-dimensional (2D) image of the fingerprint using an image sensor, an electrostatic fingerprint sensor that recognizes a fingerprint by detecting micro-currents discharged through a ski surface, or an ultrasonic fingerprint sensor that recognizes a fingerprint by using principles of medical ultrasonic waves. The electrostatic fingerprint sensor is used in an electronic device, such as a smart phone or a smart watch.

Referring to FIGS. 2 and 8, the sensor 200 may include first and second substrates 211 and 212 spaced apart from each other, and a sensor 220 provided between the first and second substrates 211 and 212. Here, the first and second substrates 211 and 212 may each be, for example, a glass substrate. However, an example embodiment is not limited thereto, and the first and second substrates 211 and 212 may each be a substrate of another material, such as a plastic substrate.

A first adhesive layer 231 may be provided between the first substrate 211 and the sensor 220, and a second adhesive layer 232 may be provided between the second substrate 212 and the sensor 220. The first and second adhesive layers 231 and 232 may each be, for example, OCA or OCR, but are not limited thereto. The first adhesive layer 231 may not be provided between the first substrate 211 and the sensor 220, and the sensor 220 may be provided directly on the first substrate 211 via a deposition process.

Referring to FIG. 8, the sensor 220 may include a plurality of first electrodes 221 and a plurality of second electrodes 222, which are spaced apart from each other, and a dielectric layer 223 provided between the first electrodes 221 and the second electrodes 222. The first and second electrodes 221 and 222 may be provided to cross each other at an angle, for example, at a right angle with the dielectric layer 223 therebetween. The first and second electrodes 221 and 222 may each include, for example, a metal or a transparent conductive material.

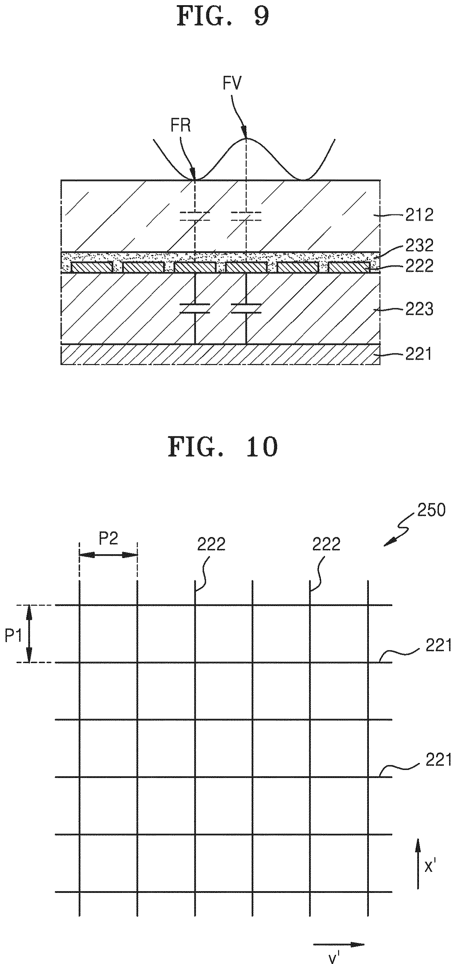

FIG. 9 is a diagram for describing principles of fingerprint recognition in the sensor 200 of FIG. 8. Referring to FIG. 9, the form of a fingerprint may be recognized due to a difference in capacitance generated by a ridge FR of the fingerprint and a valley FV of the fingerprint when a finger contacts a surface of the sensor 200. Here, an interval between the ridge FR and the valley FV may be, for example, about 600 µm to about 700 µm.

The sensor 200 may include an electrode pattern in which the pluralities of first and second electrodes 211 and 222 are periodically arranged.

FIG. 10 is a plan view of an electrode pattern 250 applicable to the sensor 200 of FIG. 2.

Referring to FIG. 10, the electrode pattern 250 may have a structure in which the first and second electrodes 221 and 222 are periodically arranged. For example, the electrode pattern 250 includes the plurality of first electrodes 221 and the plurality of second electrodes 222 crossing the first electrodes 221. The first electrodes 221 may be arranged in parallel along an x'-direction at regular intervals. The first electrodes 221 may be repeatedly arranged at a first electrode pitch P1.

The second electrodes 222 may be provided to cross the first electrodes 221 at an angle, for example, at a right angle. The second electrodes 222 may be arranged in parallel along a y'-direction perpendicular to the x'-direction at regular intervals. The second electrodes 222 may be repeatedly arranged at a second electrode pitch P2. The second electrode pitch P2 may be the same as the first electrode pitch P1, but is not necessarily limited thereto.

The first and second electrodes 221 and 222 may each be a linear electrode or a bar-type electrode. In this case, the first and second electrodes 221 and 222 may each include a metal having excellent conductivity. For example, the first and second electrodes 221 and 222 may each include copper (Cu), silver (Ag), or molybdenum (Mo), but a material thereof is not limited thereto.

As will be described below, the first or second electrode pitch P1 or P2 of the electrode pattern 250 may be smaller than the pixel pitch P of the pixel pattern 150. For example, the first or second electrode pitch P1 or P2 of the electrode pattern 250 may be about half or less of the pixel pitch P of the pixel pattern 150. For example, the first or second electrode pitch P1 or P2 of the electrode pattern 250 may be about 1/5 to 1/2 of the pixel pitch P of the pixel pattern 150, but is not limited thereto. For example, the pixel pitch P of the pixel pattern 150 may be about 40 µm to 100 µm, and the first or second electrode pitch P1 or P2 of the electrode pattern 250 may be equal to or smaller than about 50 µm.

Also, the electrode arrangement direction (x'- or y'-direction) of the electrode pattern 250 may form an angle with respect to the pixel arrangement direction (x- or y-direction) of the pixel pattern 150. For example, an angle formed by the electrode arrangement direction (x'- or y'-direction) of the electrode pattern 250 and the pixel arrangement direction (x- or y-direction) of the pixel pattern 150 may be about 0° to 45°, but is not limited thereto.

As such, by setting the first or second electrode pitch P1 or P2 of the electrode pattern 250 to be smaller than the pixel pitch P of the pixel pattern 150, and forming the angle between the electrode arrangement direction (x'- or y'-direction) of the electrode pattern 250 and the pixel arrangement direction (x- or y-direction) of the pixel electrode 150, a moire pattern that may be generated when the pixel pattern 150 and the electrode pattern 250 overlap each other may be reduced as described below. Also, at least two adjacent first electrodes 221 or at least two adjacent second electrodes 222 in the electrode pattern 250 may be grouped and electrically connected to each other such that sensitivity of the sensor 200 is increased.

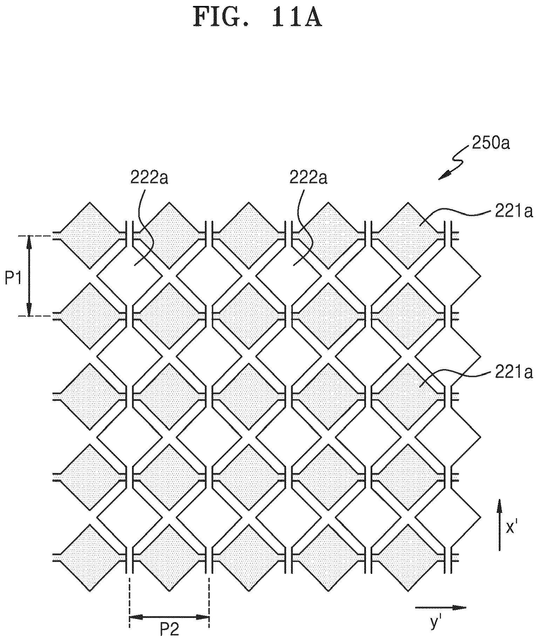

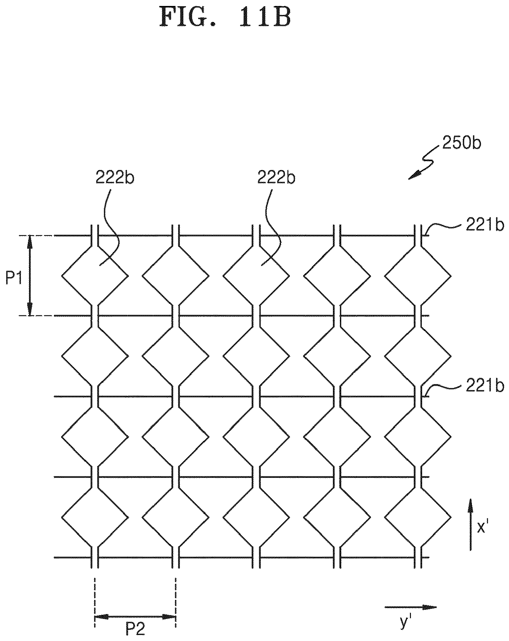

FIGS. 11A and 11B illustrate other electrode patterns 250a and 250b applicable to the sensor 200 of FIG. 2.

Referring to FIG. 11A, the electrode pattern 250a includes a plurality of first electrodes 221a and a plurality of second electrodes 222a crossing the plurality of first electrodes 221a. The first electrodes 221a may have the first electrode pitch P1 and may be repeatedly arranged along the x'-direction. Also, the second electrodes 222a may be arranged to cross the first electrodes 221a at angles, for example, at right angles. Such second electrodes 222a may be repeatedly arranged along the y'-direction perpendicular to the x'-direction with the second electrode pitch P2.

Each of the first and second electrodes 221a and 222a may be an electrode in which a plurality of rhombuses are connected. The first and second electrodes 221a and 222a may each include a transparent conductive material. For example, the first and second electrodes 221a and 222a may include indium tin oxide (ITO), but is not limited thereto.

Referring to FIG. 11B, the electrode pattern 250b includes a plurality of first electrodes 221b and a plurality of second electrodes 222b crossing the plurality of first electrodes 221b. The first electrodes 221b may have the first electrode pitch P1 and may be repeatedly arranged along the x'-direction. Also, the second electrodes 222b may be arranged to cross the first electrodes 221b at angles, for example, at right angles. Such second electrodes 222b may be repeatedly arranged along the y'-direction perpendicular to the x'-direction with the second electrode pitch P2.

The first electrode 221b may be a linear electrode or a bar-type electrode. Such first electrode 221b may include a metal material having excellent conductivity. Also, the second electrode 222b may be an electrode in which a plurality of rhombuses are connected. Such second electrode 222b may include a transparent conductive material. Hereinabove, the first electrode 221b is a linear electrode or a bar-type electrode and the second electrode 222b is an electrode in which a plurality of rhombuses are connected. Alternatively, the first electrode 221b may be an electrode in which a plurality of rhombuses are connected and the second electrode 222b may be a linear electrode or a bar-type electrode.

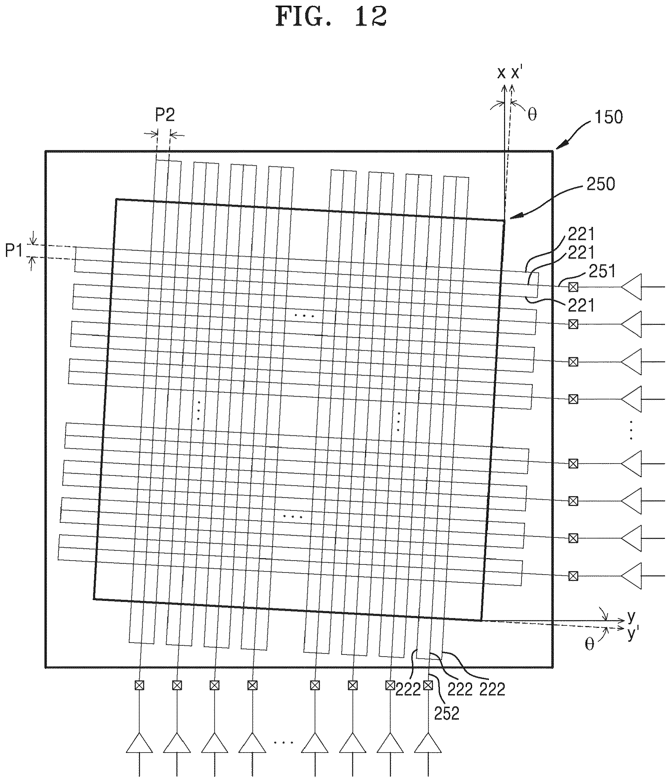

FIG. 12 is a plan view of the display apparatus 1000 of FIG. 2, in which the pixel pattern 150 of the display panel 100 and the electrode pattern 250 of the sensor 200 overlap, according to an example embodiment.

Referring to FIG. 12, as described above, the red, green, and blue pixels R, G, and B are periodically arranged with the pixel pitch P in the pixel pattern 150. Here, the red, green and blue pixels R, G, and B may be arranged along the x-direction and the y-direction perpendicular to the x-direction.

Also, the first and second electrodes 221 and 222 are periodically arranged with the first and second electrode pitches P1 and P2 in the electrode pattern 250. For example, the first electrodes 221 are periodically arranged along the x'-direction with the first electrode pitch P1, and the second electrodes 222 are periodically arranged along the y'-direction perpendicular to the x'-direction with the second electrode pitch P2.

The first or second electrode pitch P1 or P2 of the electrode pattern 250 may be smaller than the pixel pitch P of the pixel pattern 150. For example, the first or second electrode pitch P1 or P2 of the electrode pattern 250 may be about half or less of the pixel pitch P of the pixel pattern 150. For example, the electrode pitch P1 or P2 of the electrode pattern 250 may be about 1/5 to 1/2 of the pixel pitch P of the pixel pattern 150, but is not limited thereto. Also, the electrode arrangement direction (x'- or y'-direction) of the electrode pattern 250 may form an angle θ with the pixel arrangement direction (x- or y-direction) of the pixel electrode 150. For example, the angle θ formed by the electrode arrangement direction (x'- or y'-direction) of the electrode pattern 250 and the pixel arrangement direction (x- or y-direction) of the pixel pattern 150 may be about 0° to 45°, but is not limited thereto.

As such, by setting the first or second electrode pitch P1 or P2 of the electrode pattern 250 to be smaller than the pixel pitch P of the pixel pattern 150, and forming the angle θ between the electrode arrangement direction (x'- or y'-direction) of the electrode pattern 250 and the pixel arrangement direction (x- or y-direction) of the pixel electrode 150, a moire pattern that may be generated when the pixel pattern 150 and the electrode pattern 250 overlap each other may be reduced.

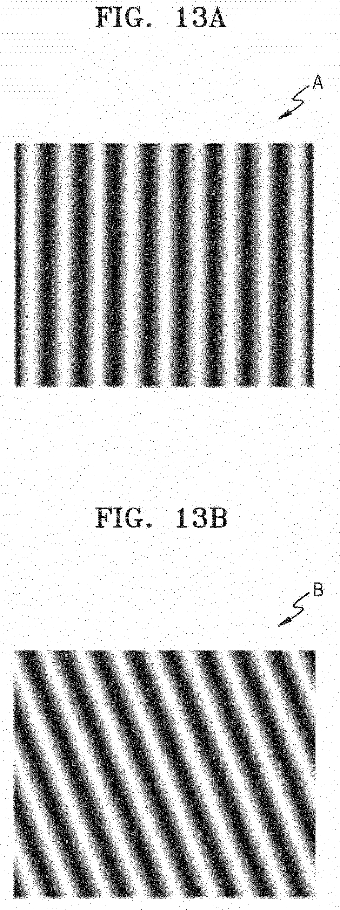

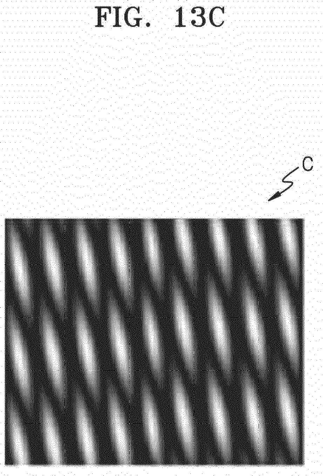

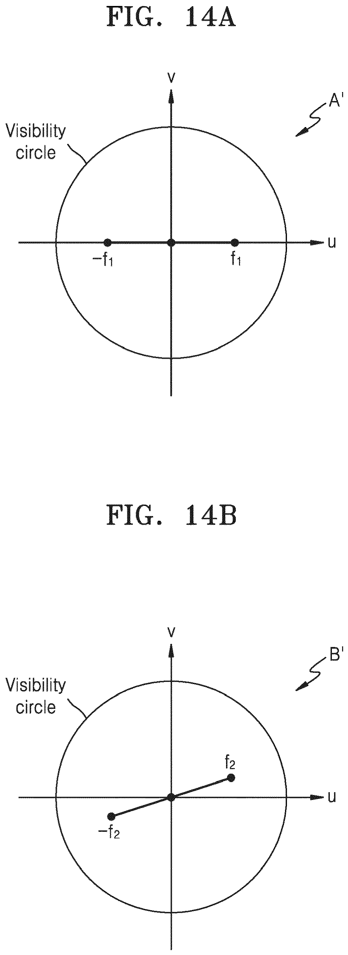

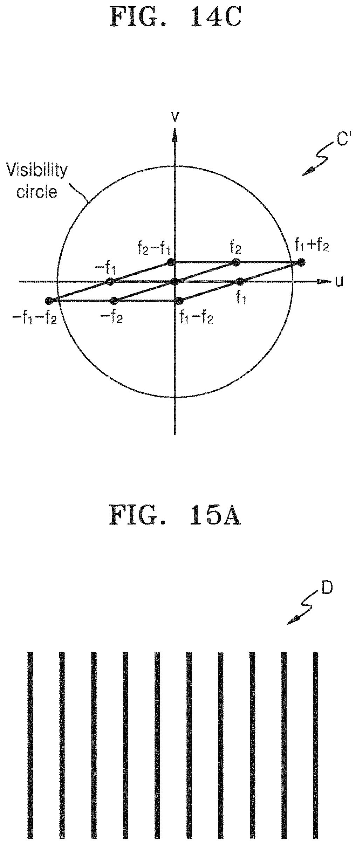

FIGS. 13A, 13B and 13C illustrate first through third real-space patterns A through C for describing a case in which a moire pattern is generated. FIGS. 14A, 14B and 14C illustrate first through third spatial frequency vector distributions A' through C' in which the first through third real-space patterns A through C of FIGS. 13A through 13C are expressed via Fourier transform. In FIGS. 14A through 14C, u and v denote directions, and f₁ and f₂ respectively denote a first-direction frequency vector and a second-direction frequency vector. Also, a visibility circle denotes a threshold pitch (corresponding to 60 cycles/degrees) of a pattern distinguishable by the human eye. When a frequency vector is outside the visibility circle, it is difficult for the frequency vector to be distinguished by the human eye, and thus it is not recognized as a pattern.

FIG. 13A illustrates the first real-space pattern A formed in a vertical direction, and FIG. 14A illustrates the first spatial frequency vector distribution A' in which the first real-space pattern A of FIG. 13A is expressed via Fourier transform. FIG. 13B illustrates the second real-space pattern B formed in a direction inclined at an angle with respect to the vertical direction, and FIG. 14B illustrates the second spatial frequency vector distribution B' in which the second real-space pattern B of FIG. 13B is expressed via Fourier transform. Here, a pitch of the first real-space pattern A and a pitch of the second real-space pattern B are similar.

FIG. 13C illustrates the third real-space pattern C in which the first real-space pattern A of FIG. 13A and the second real-space pattern B of FIG. 13B overlap each other, and FIG. 14C illustrates the third spatial frequency vector distribution C' obtained via a convolution sum of frequency vectors shown in FIG. 14A and frequency vectors shown in FIG. 14B. Referring to FIG. 13C, a moire pattern is generated in the third real-space pattern C formed when the first and second real-space patterns A and B having the similar pitch overlap each other. The moire pattern is determined to be generated because frequency vectors in the third spatial frequency vector distribution C' of FIG. 14C exist within a visibility circle.

As such, it is determined that a moire pattern is generated when patterns having a similar pitch overlap each other. For example, in a high-resolution display apparatus used in an electronic device, such as a smart phone or a smart watch, a pixel pattern of a display panel has a pixel pitch of about 40 µm to 120 µm. At this time, when an electrode pattern of a sensor has an electrode pitch of about 50 µm to 100 µm, the electrode pitch of the electrode pattern and the pixel pitch of the pixel pattern are similar, and thus a moire pattern may be generated.

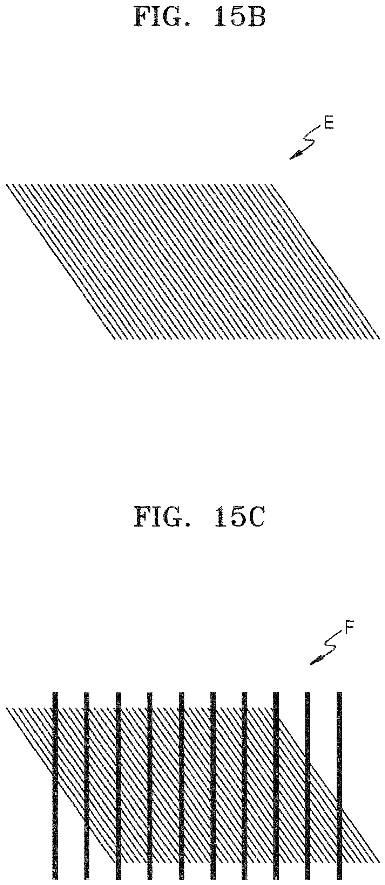

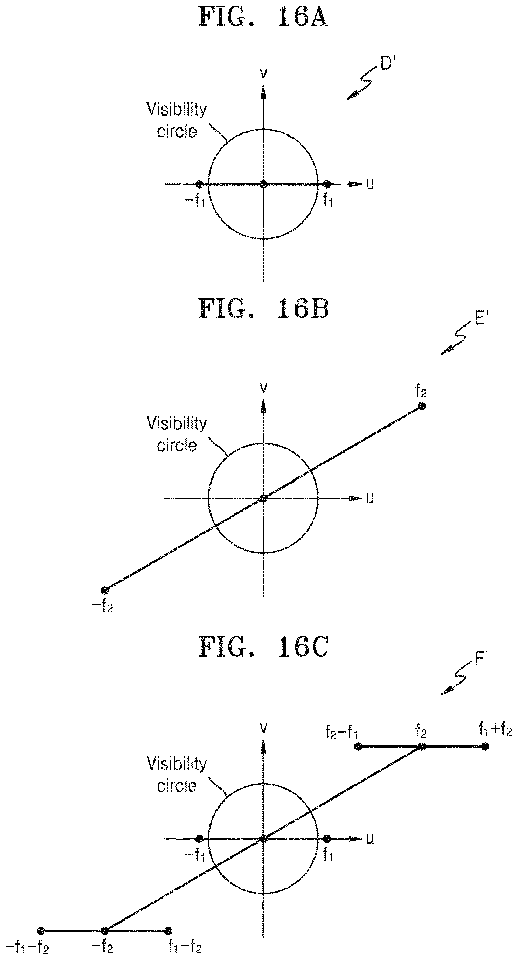

FIGS. 15A, 15B and 15C illustrate first through third real-space patterns D through F for describing a case in which a moire pattern is not generated, according to example embodiments, and FIGS. 16A, 16B and 16C illustrate first through third spatial frequency vector distributions D' through F' in which the first through third real-space patterns D through F of FIGS. 15A through 15C are expressed via Fourier transform. In FIGS. 16A through 16C, u and v denote directions, and f₁ and f₂ respectively denote a first-direction frequency vector and a second-direction frequency vector.

FIG. 15A illustrates the first real-space pattern D formed in a vertical direction, and FIG. 16A illustrates the first spatial frequency vector distribution D' in which the first real-space pattern D of FIG. 15A is expressed via Fourier transform. FIG. 15B illustrates the second real-space pattern E inclined at an angle with respect to the vertical direction, and FIG. 16B illustrates the second spatial frequency vector distribution E' in which the second real-space pattern E of FIG. 15B is expressed via Fourier transform. Here, a pitch of the second real-space pattern E is much smaller than a pitch of the first real-space pattern D.

FIG. 15C illustrates the third real-space pattern F in which the first real-space pattern D of FIG. 15A and the second real-space pattern E of FIG. 15B overlap each other, and FIG. 16C illustrates the third spatial frequency vector distribution F' obtained via a convolution sum of frequency vectors shown in FIG. 15A and frequency vectors shown in FIG. 15B. In the third spatial frequency vector distribution F' of FIG. 16C, frequency vectors exist outside a visibility circle. Accordingly, the pitch of the first real-space pattern D and the pitch of the second real-space pattern E have a large difference, and when the second real-space pattern E has an angle with respect to the first real-space pattern D, generation of a moire pattern is reduced in the third real-space pattern F formed by the first and second real-space patterns D and E overlapping each other.

Accordingly, referring again to FIG. 12, in the current example embodiment, a moire pattern that may be generated when the pixel pattern 150 and the electrode pattern 250 overlap each other may be reduced by setting the first or second electrode pitch P1 or P2 of the electrode pattern 250 to be smaller than the pixel pitch P of the pixel pattern 150 and adjusting the electrode arrangement direction (x'- or y'-direction) of the electrode pattern 250 to have an angle with respect to the pixel arrangement direction (x- or y-direction) of the pixel pattern 150.

The first or second electrode pitch P1 or P2 of the electrode pattern 250 may be about 1/2 or less of the pixel pitch P of the pixel pattern 150. For example, when the pixel pitch P is about 40 µm to 100 µm, the first or second electrode pitch P1 or P2 of the electrode pattern 250 may be about 50 µm or less. For example, the first or second electrode pitch P1 or P2 of the electrode pattern 250 may be about 1/5 to 1/2 of the pixel pitch P of the electrode pattern 250. However, an example embodiment is not limited thereto. Here, the first or second electrode pitch P1 or P2 of the electrode pattern 250 for reducing generation of a moire pattern may be adjusted based on the pixel pitch P of the pixel pattern 150, an angle between the electrode arrangement direction (x'- or y'-direction) of the electrode pattern 250 and the pixel arrangement direction (x- or y-direction) of the pixel pattern 150, and shapes of the first and second electrodes 221 and 222 in the electrode pattern 250.

The electrode arrangement direction (x'- or y'-direction) of the electrode pattern 250 may be adjusted to have an angle θ with the pixel arrangement direction (x- or y-direction) of the pixel pattern 150. Here, the angle θ between the electrode arrangement direction (x'- or y'-direction) of the electrode pattern 250 and the pixel arrangement direction (x- or y-direction) of the pixel pattern 150, which may reduce generation of a moire pattern, may be determined based on the pixel pitch P of the pixel pattern 150, the first or second electrode pitch P1 or P2 of the electrode pattern 250, and shapes of the first and second electrodes 221 and 222 of the electrode pattern 250.

For example, the angle θ between the electrode arrangement direction (x'- or y'-direction) of the electrode pattern 250 and the pixel arrangement direction (x- or y-direction) of the pixel pattern 150 may be about 0° to 45°, but is not limited thereto. The electrode arrangement direction (x'- or y'-direction) of the electrode pattern 250 may be inclined with respect to the pixel arrangement direction (x- or y-direction) of the pixel pattern 150 at an angle. Generation of a moire pattern may also be reduced when the electrode arrangement direction (x'- or y'-direction) of the electrode pattern 250 and the pixel arrangement direction (x- or y-direction) of the pixel pattern 150 are parallel according to the pixel pitch P of the pixel pattern 150, the first or second electrode pitch P1 or P2 of the electrode pattern 250, and shapes of the first and second electrodes 221 and 222 of the electrode pattern 250.

Also, as shown in FIG. 12, at least two adjacent first electrodes 221 or at least two adjacent second electrodes 222 in the electrode pattern 250 may be electrically connected to each other through one line to exchange a signal. Here, The number of first or second electrodes 221 or 222 connected to each other may be about 2 to 10. For example, the number of first or second electrodes 221 or 222 connected to each other may be about 3 to 4, but is not limited thereto. In FIG. 12, a group of three first electrodes 221 and a group of three second electrodes 222 are electrically connected to each other.

For example, adjacent first electrodes 221 among the first electrodes 221 may be grouped and connected to one first signal line 251. Also, adjacent second electrodes 222 among the second electrodes 222 may be grouped and connected to one second signal line 252. Here, the first and second signal lines 251 and 252 may respectively be, for example, a transmission line and a reception line.

As described above, generation of a moire pattern may be reduced when the first or second electrode pitch P1 or P2 of the electrode pattern 250 is smaller than the pixel pitch P of the pixel pattern 150, but a size of a signal measurable by each of the first and second electrodes 221 and 222 may be reduced. Accordingly, a signal-to-noise ratio may be decreased, and when a thickness of the second substrate 212 provided above the sensor 220 is large, for example, 100 µm or higher, sensing of the sensor 200 may be difficult. In this regard, in the current example embodiment, the sensor 200 is driven by grouping at least two adjacent first electrodes 221 or at least two adjacent second electrodes 222 in the electrode pattern 250 such that performance of the sensor 200 does not deteriorate.

As such, the display apparatus 1000 capable of reducing generation of a moire pattern while exhibiting high performance of the sensor 200 may be realized by setting the first or second electrode pitch P1 or P2 of the electrode pattern 250 to be smaller than the pixel pitch P of the pixel pattern 150, adjusting the electrode arrangement direction (x'- or y'-direction) of the electrode pattern 250 to have an angle with respect to the pixel arrangement direction (x- or y-direction) of the pixel pattern 150, and grouping and electrically connecting at least two adjacent first electrodes 221 or at least two adjacent second electrodes 222 in the electrode pattern 250.

Hereinabove, the sensor 200 shown in FIG. 2 is a fingerprint sensor. However, the sensor 200 is not limited thereto and may be a touch sensor. A touch sensor has a stacked structure similar to a fingerprint sensor, and an electrode pattern of the touch sensor has the same structure as an electrode pattern of the fingerprint sensor. The electrode pattern of the touch sensor may have a larger electrode pitch than the electrode pattern of the fingerprint sensor. However, when the electrode pitch of the electrode pattern of the touch sensor is similar to a pixel pitch of a pixel pattern, a moire pattern may be generated. Accordingly, as described above, the electrode pitch and an electrode arrangement direction of the electrode pattern may be adjusted and adjacent electrodes may be electrically connected to one signal line to reduce generation of a moire pattern and increase performance of the touch sensor.

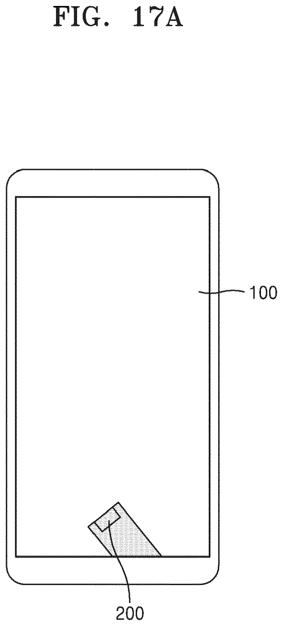

In the display apparatus 1000 of FIG. 1, the sensor 200 may be provided throughout a top surface of the display panel 100, but as shown in FIGS. 17A through 17C, the sensor 200 may be provided only on a part of the top surface of the display panel 100.

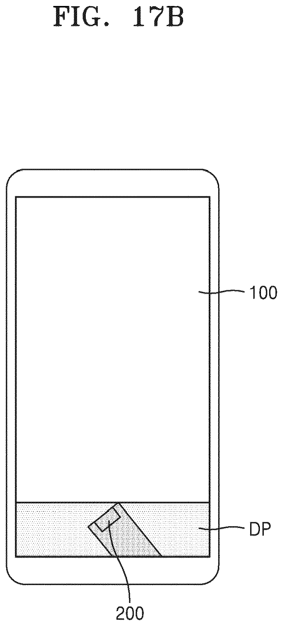

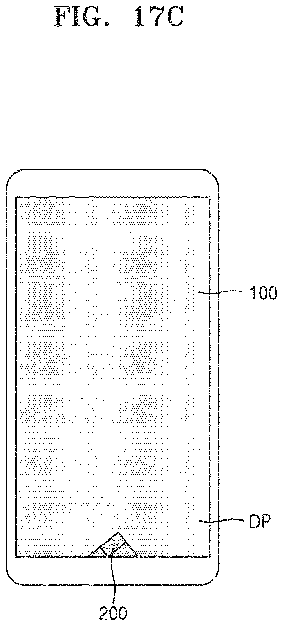

FIGS. 17A, 17B and 17C illustrate arrangements of the display panel 100 and the sensor 200 in the display apparatus 1000 of FIG. 1.

Referring to FIG. 17A, the sensor 200 may be provided on lower side of the display panel 100. Alternatively, the sensor 200 may be provided on upper side, left side, or right side of the display panel 100.

Referring to FIG. 17B, the sensor 200 is located on lower side of the display panel 100, and a dummy pattern DP may be additionally provided on lower side of the display panel 100. The dummy pattern DP may prevent a region on which the sensor 200 is disposed from being exposed to the outside due to differences in transmittance and colors between the region on which the sensor 200 is disposed and a region on which the sensor 200 is not disposed. The sensor 200 and the dummy pattern DP may be provided on upper side, left side or right side of the display panel 100.

Referring to FIG. 17C, the sensor 200 is located on lower side of the display panel 100, and the dummy pattern DP may be additionally provided throughout the top surface of the display panel 100. The dummy pattern DP may prevent the region on which the sensor 200 exists from being exposed to the outside as described above. The sensor 200 may be provided on upper side, left side, or right side of the display panel 100.

In the arrangements of the sensor 200 shown in FIGS. 17A through 17C, when electrodes of the sensor 200 are, for example, transparent electrodes not having sufficiently low resistance, the sensor 200 may be disposed at an outermost region of the display panel 100.

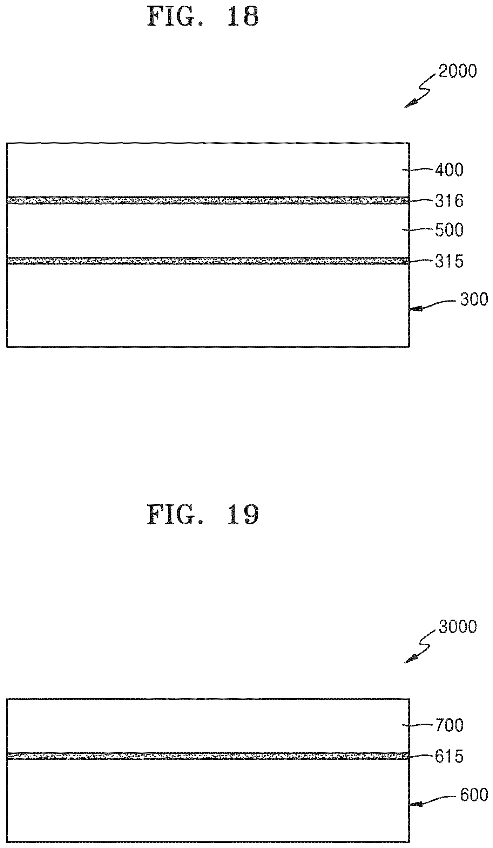

FIG. 18 is a cross-sectional view of a display apparatus 2000 according to another example embodiment.

Referring to FIG. 18, the display apparatus 2000 includes a display panel 300, a first sensor 400 provided above the display panel 300, and a second sensor 500 provided between the display panel 300 and the first sensor 400. A first adhesive layer 315 is provided between the display panel 300 and the second sensor 50, and a second adhesive layer 316 is provided between the second sensor 500 and the first sensor 400. The first and second adhesive layers 315 and 316 may each be, for example, OCA or OCR, but are not limited thereto.

The display panel 300 may include, for example, the organic light-emitting display panel 100a of FIG. 3 or the liquid crystal display panel 100b of FIG. 4, but is not limited thereto. The display panel 100 may include, for example, the pixel pattern 150 or 150a of FIG. 5, 6, or 7.

The first sensor 400 may be a fingerprint sensor. For example, the first sensor 400 may be an electrostatic fingerprint sensor. The first sensor 400 may include, for example, the electrode pattern 250, 250a, or 250b of FIG. 10, 11A, or 11B. A structure of such an electrostatic fingerprint sensor has been described above, and thus details thereof are not provided again.

The second sensor 500 may be a touch sensor. For example, the second sensor 500 may be an electrostatic touch sensor. The electrostatic touch sensor has a very similar stacked structure as the electrostatic fingerprint sensor. However, in the touch sensor, an electrode pitch of an electrode pattern may be much larger than a pixel pitch of a pixel pattern. As such, when the pixel pitch of the display panel 300 and the electrode pitch of the second sensor 500, i.e., the touch sensor, has a large difference, a moire pattern is less likely to be generated even when the display panel 300 and the second sensor 500, i.e., the touch sensor, overlap each other.

However, when the first sensor 400, i.e., the fingerprint sensor, and the display panel 300 overlap each other, a moire pattern may be generated as described above. Accordingly, in the current example embodiment, a moire pattern that may be generated when the first sensor 400, i.e., the fingerprint sensor, and the display panel 300 overlap each other may be reduced by setting an electrode pitch of an electrode pattern of the first sensor 400 to be smaller than the pixel pitch of the pixel pattern of the display panel 300, and adjusting an electrode arrangement direction of the electrode pattern of the first sensor 400 to have an angle with respect to a pixel arrangement direction of the pixel pattern of the display panel 300. Also, at least two adjacent electrodes in the electrode pattern of the first sensor 400, i.e., the fingerprint sensor, may be grouped and connected to each other to increase performance of the first sensor 400.

FIG. 19 is a cross-sectional view of a display apparatus 3000 according to another example embodiment.

Referring to FIG. 19, the display apparatus 3000 includes a display panel 600 and a sensor 700 provided over the display panel 600. An adhesive layer 615 may be provided between the display panel 600 and the sensor 700. The display panel 600 may include, for example, the organic light-emitting display panel 100a of FIG. 3 or the liquid crystal display panel 100b of FIG. 4. The display panel 600 may include, for example, the pixel pattern 150 or 150a of FIG. 5, 6, or 7.

The sensor 700 may be a fingerprint-touch complex sensor. For example, the sensor 700 may be an electrostatic fingerprint-touch complex sensor. The electrostatic fingerprint-touch complex sensor has a stacked structure similar to an electrostatic fingerprint sensor or an electrostatic touch sensor.

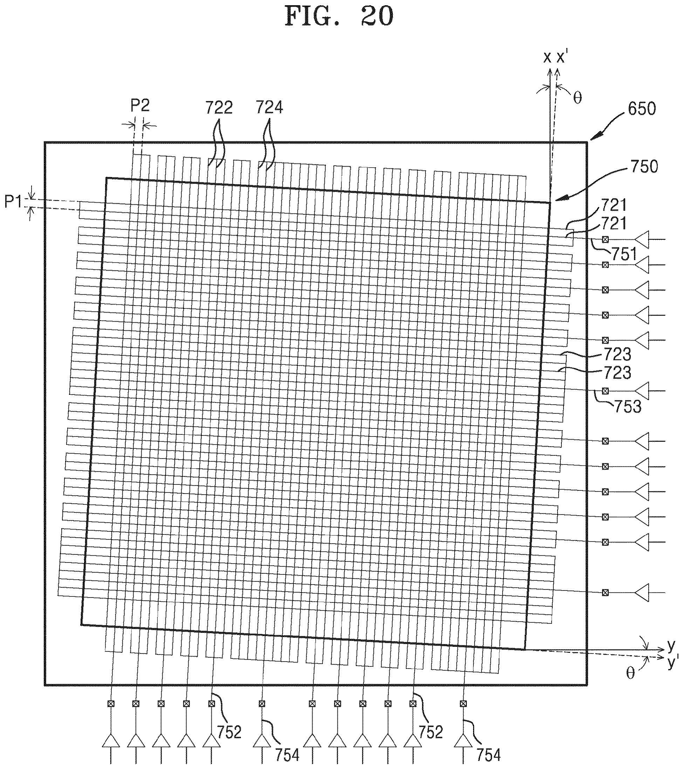

FIG. 20 is a plan view of the display apparatus 3000 of FIG. 19, in which a pixel pattern 650 of the display panel 600 and an electrode pattern 750 of the sensor 700 overlap, according to another example embodiment.

Referring to FIG. 20, in the pixel pattern 650 of the display panel 600, a plurality of pixels are periodically arranged with a pixel pitch. Here, the pixels may be arranged along an x-direction and a y-direction perpendicular to the x-direction. In the electrode pattern 750 of the sensor 700, a plurality of electrodes are periodically arranged with the first or second electrode pitch P1 or P2. The plurality of electrodes may include a plurality of first electrodes repeatedly arranged with the first electrode pitch P1 along an x'-direction, and a plurality of second electrodes repeatedly arranged with the second electrode pitch P2 along a y'-direction.

The plurality of first electrodes may include a plurality of first fingerprint electrodes 721 and a plurality of first touch electrodes 723 periodically disposed between the plurality of first fingerprint electrodes 721 on the same plane as the plurality of first fingerprint electrodes 721. Also, the plurality of second electrodes may include a plurality of second fingerprint electrodes 722 and a plurality of second touch electrodes 724 periodically disposed between the plurality of second fingerprint electrodes 722 on the same plane as the plurality of second fingerprint electrodes 722. Here, the pluralities of first and second fingerprint electrodes 721 and 722 form a fingerprint sensor, and the pluralities of the first and second touch electrodes 723 and 724 form a touch sensor.

In the current example embodiment, as described above, to reduce generation of a moire pattern, the first or second electrode pitch P1 or P2 of the electrode pattern 750 may be smaller than the pixel pitch P of the pixel pattern 650, and an electrode arrangement direction (x'- or y'-direction) of the electrode pattern 750 may form an angle θ with a pixel arrangement direction (x- or y-direction) of the pixel pattern 650. For example, the angle θ formed by the electrode arrangement direction (x'- or y'-direction) of the electrode pattern 750 and the pixel arrangement direction (x- or y-direction) of the pixel pattern 650 may be about 0° to 45°, but is not limited thereto.

Also, in the current example embodiment, to increase sensibility of the sensor 700, at least two adjacent electrodes in the electrode pattern 750 may be grouped and electrically connected to each other. For example, at least two adjacent first fingerprint electrodes 721 may be grouped and connected to a first fingerprint signal line 751. Also, at least two adjacent second fingerprint electrodes 722 may be grouped and connected to a second fingerprint signal line 752.

Also, at least two adjacent first touch electrodes 723 may be grouped and connected to a first touch signal line 753. Also, at least two adjacent second touch electrodes 724 may be grouped and connected to a second touch signal line 754.

The number of first touch electrodes 723 connected to one first touch signal line 753 may be equal to or higher than the number of first fingerprint electrodes 721 connected to one first fingerprint signal line 751. Also, the number of second touch electrodes 724 connected to one second touch signal line 754 may be equal to or higher than the number of second fingerprint electrodes 722 connected to one second fingerprint signal line 754. In FIG. 20, a group of three adjacent first fingerprint electrodes 721 and a group of three adjacent second fingerprint electrodes 722 are respectively connected to the first and second fingerprint signal lines 751 and 752, and a group of six adjacent first touch electrodes 723 and a group of six adjacent second touch electrodes 724 are respectively connected to the first and second touch signal lines 753 and 754. Also, in FIG. 20, five first fingerprint signal lines 751 and one first touch signal line 753 are alternately disposed, and five second fingerprint signal lines 752 and one second touch signal line 754 are alternately disposed.

As such, when the numbers of first and second fingerprint electrodes 721 and 722 respectively connected to the first and second fingerprint signal lines 751 and 752 are equal to or lower than the numbers of first and second touch electrodes 723 and 724 respectively connected to the first and second touch signal lines 753 and 754, intervals between the first fingerprint signal lines 751 and between the second fingerprint signal lines 752 may be equal to or smaller than intervals between the first touch signal lines 753 and between the second touch signal lines 754. For example, the intervals between the first fingerprint signal lines 751 and between the second fingerprint signal lines 752 may be about 70 µm, and the intervals between the first touch signal lines 753 and between the second touch signal lines 754 may be about 4 mm, but are not limited thereto. In this regard, a fingerprint of a finger may be sensed through the first and second fingerprint signal lines 751 and 752 that are arranged relatively at narrow intervals, and a contact location of the finger on the display apparatus 3000 may be sensed through the first and second touch signal lines 753 and 754 that are arranged relatively at wide intervals.

According to the example embodiments described above, in a display apparatus in which a sensor having an electrode pattern is stacked on a display panel having a pixel pattern, a moire pattern that is generated when the pixel pattern and the electrode pattern overlap may be reduced by setting an electrode pitch of the electrode pattern to be smaller than a pixel pitch of the pixel pattern and adjusting an electrode arrangement direction of the electrode pattern to have an angle with respect to a pixel arrangement direction of the pixel pattern. In addition, performance of the sensor may be increased by electrically connecting adjacent electrodes among electrodes forming the electrode pattern in the sensor through one line to send and receive a signal.

It may be understood that the example embodiments described herein may be considered in a descriptive sense only and not for purposes of limitation. Descriptions of features or aspects within each example embodiment may typically be considered as available for other similar features or aspects in other example embodiments.

While the example embodiments have been described with reference to the figures, it will be understood by those of ordinary skill in the art that various changes in form and details may be made therein without departing from the scope as defined by the following claims.

## Claims

1. A display apparatus comprising:
a display panel comprising a pixel pattern in which pixels are periodically arranged; and
a first sensor disposed on the display panel and comprising an electrode pattern in which a plurality of electrodes are periodically arranged,
wherein an electrode pitch of the electrode pattern is smaller than a pixel pitch of the pixel pattern,
an electrode arrangement direction of the electrode pattern forms an angle with respect to a pixel arrangement direction of the pixel pattern, and
at least two adjacent electrodes among the plurality of electrodes are connected to each other and configured to send and receive signals through one line.

2. The display apparatus of claim 1, wherein the display panel comprises an organic light-emitting display panel or a liquid crystal display panel.

3. The display apparatus of claim 1 or 2, wherein the electrode pitch of the electrode pattern is half or less of the pixel pitch of the pixel pattern.

4. The display apparatus of any preceding claim, wherein the angle of the electrode arrangement direction of the electrode pattern with respect to the pixel arrangement direction of the pixel pattern is 0° to 45°.

5. The display apparatus of any preceding claim, wherein a number of the at least two adjacent electrodes electrically connected to each other is 2 to 10.

6. The display apparatus of any preceding claim, wherein the first sensor comprises a fingerprint sensor or a touch sensor.

7. The display apparatus of claim 6, wherein the plurality of electrodes comprise a plurality of first electrodes and a plurality of second electrodes crossing the plurality of first electrodes, and further optionally wherein adjacent first electrodes among the plurality of first electrodes are connected to a first signal line, and
adjacent second electrodes among the plurality of second electrodes are connected to a second signal line.

8. The display apparatus of any preceding claim, further comprising a second sensor interposed between the display panel and the first sensor, and optionally wherein the first sensor comprises a fingerprint sensor, and
the second sensor comprises a touch sensor.

9. The display apparatus of any preceding claim, wherein the first sensor comprises a fingerprint-touch complex sensor.

10. The display apparatus of claim 9, wherein the plurality of electrodes comprise:
a plurality of first fingerprint electrodes;
a plurality of second fingerprint electrodes crossing the plurality of first fingerprint electrodes;
a plurality of first touch electrodes arranged periodically between the plurality of first fingerprint electrodes on a same first plane as the plurality of first fingerprint electrodes; and
a plurality of second touch electrodes arranged periodically between the plurality of second fingerprint electrodes on a same second plane as the plurality of second fingerprint electrodes, and optionally wherein adjacent first fingerprint electrodes among the plurality of first fingerprint electrodes are connected to a first fingerprint signal line, and
adjacent second fingerprint electrodes among the plurality of second fingerprint electrodes are connected to a second fingerprint signal line.

11. The display apparatus of claim 10, wherein adjacent first touch electrodes among the plurality of first touch electrodes are connected to a first touch signal line, and
adjacent second touch electrodes among the plurality of second touch electrodes are connected to a second touch signal line.

12. The display apparatus of claim 11, wherein, among the plurality of first touch electrodes and the plurality of first fingerprint electrodes, a first number of the adjacent first touch electrodes that are electrically connected to each other is greater than or equal to a second number of the adjacent first fingerprint electrodes that are electrically connected to each other, and
among the plurality of second touch electrodes and the plurality of second fingerprint electrodes, a third number of the adjacent second touch electrodes that are electrically connected to each other is greater than or equal to a fourth number of the adjacent second fingerprint electrodes that are electrically connected to each other.

13. The display apparatus of any preceding claim, wherein the first sensor is disposed on one portion of the display panel, and optionally further comprising a dummy pattern disposed on the display panel and configured to prevent visibility of the first sensor.

14. The display apparatus of any preceding claim, wherein the electrode arrangement direction is parallel or perpendicular to one of the plurality of electrodes.

15. A method of driving a display apparatus, the display apparatus comprising a display panel comprising a pixel pattern in which pixels are periodically arranged; and a first sensor disposed on the display panel and comprising an electrode pattern in which a plurality of electrodes are periodically arranged, the method comprising:
making an electrode pitch of the electrode pattern smaller than a pixel pitch of the pixel pattern;
setting an electrode arrangement direction of the electrode pattern to form an angle with respect to a pixel arrangement direction of the pixel pattern; and
connecting at least two adjacent electrodes among the plurality of electrodes to each other such that the at least two adjacent electrodes send and receive signals through one line.
